# EUROPEAN PATENT SPECIFICATION

(11) **EP 1 376 924 B1**
(45) Date of publication and mention of the grant of the patent: **03.01.2007**
(21) Application number: 03101779.1
(22) Date of filing: 18.06.2003
(51) Int. Cl.: H04L 9/08

(54) **End-to-end encryption key management in a mobile communications system**
Ende-zu-Ende Verschlüsselungsverschlüssel- Verwaltung in einem Mobilkommunikationssystem
Gestion de clés pour chiffrement boût à boût dans un système de communication mobile

(30) Priority: 27.06.2002 FI 20021260
(43) Date of publication of application: 02.01.2004
(73) Proprietor: EADS Secure Networks Oy, 00380 Helsinki (FI)
(72) Inventor: Toivonen, Ari, 02600, Espoo (FI)
(74) Representative: Äkräs, Tapio Juhani

(56) References cited:
- US-A- 5 173 938
- US-A- 5 778 071

## Description

### FIELD OF THE INVENTION

The present invention relates to an end-to-end encryption in communications systems and especially to encryption key management.

### BACKGROUND OF THE INVENTION

A high-security communications system relies on an encryption algorithm and an encryption key in order to encrypt a stream of data/voice being passed between two or more user terminals. Only user terminals sharing identical keys and algorithms are capable of intelligibly reproducing the communication, thereby enabling a secure communication. Typical users of the secure communication systems include police and public safety personnel, for example, who often require secure voice and/or data communications between mobile transmitters and receivers, such as in-car mobile or hand-held portable radios (mobile stations) as well as communication nodes in the system infrastructure, such as a central dispatching station.

In a wireless mobile communications system, communication over the air interface is very vulnerable to eavesdropping and fraudulent use of the system. Therefore, in modern digital wireless communications systems, the communication between the user's terminal and the network infrastructure over the air interface is protected by means of an air interface encryption. Examples of mobile communications systems using air interface encryption include the GSM system (Global System for Mobile Communications) and the TETRA system (Terrestrial Trunked Radio). However, user traffic is typically transferred uncrypted within the system infrastructure, and therefore, there is a possibility that the user traffic can be accessed by unauthorized parties. In end-to-end encrypted communication the sending party encrypts the user traffic so that the encrypted traffic passes through the entire end-to-end connection and is decrypted by the receiving party. This improves the security of the communication. Typically the end-to-end encryption is provided on top of the communication system, i.e. on the user level. Thus, the air interface encryption and other underlying security functions provided by the communication system may still be employed.

In order to use the end-to-end encryption the terminal must have the end-to-end encryption key(s) and the appropriate algorithm(s). Further, in order to improve the security of the system, the encryption key is changed frequently. This requires encryption key management.

In most secure communications systems, the encryption key is loaded into the user terminal manually using a special purpose key loader. However, this approach is not feasible for large communications systems. In a large communications system there is often a centralized key management system, which is often referred to as a key management controller (KMC). U.S. patent 5,173,938 discloses a key management system wherein a key management controller (KMC) distributes the encryption keys to key loaders over the air, and the keys are loaded to the user terminals manually by means of the key loader. In more sophisticated centralized key management systems, the encryption keys are transmitted directly to the user terminals over the air. This approach is often referred to as an over-the-air key (OTAK) management. The key management messages employed for distributing the end-to-end encryption keys (often referred to as traffic encryption keys, TEKs) are often encrypted by a further encryption key, often referred to as a key encryption key (KEK). As a result, an efficient and secure way to manage encryption keys in a communications system is obtained.

U.S. patent 5,778,071 describes a user authentication and data encryption method where a smartcard is inserted into a portable communication device. The smartcard or the communication device comprises a secret or private encryption key, and means for selecting the encryption algorithm used. The smartcard is arranged to allow a unique identification of the user.

In order to reduce costs, and sometimes also for technical reasons, many organizations desire to have more flexibility for using the terminals, e.g. to have at least some of the user terminals in a shared use. The user terminals having the end-to-end encryption capability are often expensive special purpose terminals, and the cost of the terminal equipment in the organization can be reduced by the shared use of the terminals. For example, different policemen can use the same user terminal during different shifts. However, they may be willing to or authorized to use different encryption keys and algorithms. Because the users are not willing to compromise the security of the system, the shared use is very restricted or even impossible. Also the encryption key management is challenging.

### A SUMMARY OF THE INVENTION

An object of the present invention is an encryption key management which alleviates the problems relating to the flexible, e.g. shared use of subscriber terminals.

At least one end-to-end encryption algorithm and at least one end-to-end encryption key or cipher key are provided in a removable end-to-end encryption module, such as a smart card, that can be removably inserted or placed inside a user terminal. In other words, substantially all functionality, data and parameters which are user-specific in the end-to-end encryption are located in the removable encryption module. The encryption module can be attached to any user terminal which is capable of accommodating such module. The combination of the encryption module and the user terminal forms the user equipment with the end-to-end encryption capability. The encryption module, when attached to the user terminal, interacts with the user terminal providing, for example, key stream segments on demand and receiving and sending synchronization data. Additionally, the interface between the encryption module and the terminal will be used for transferring key management messages. The removable encryption module provides various advantages, such as that the encryption module can be easily removed and inserted to another user terminal, if needed, e.g. if the user terminal is broken in some accident or the user terminal is in a shared use by two or more users. As the end-to-end encryption features are in a separate module and thereby separated from the rest of the user terminals' normal functionality, the user terminal without the module is basically a normal user terminal of the communication system. Thereby, the need for the special user terminals is avoided. Further, the removable encryption module allows more freedom in updating, changing and selecting the encryption algorithms employed, because the end-to-end encryption is substantially independent of the underlying mobile communication network and the other functionality of the user terminal.

However, from the perspective of the encryption key management, this physical and functional separation of the end-to-end encryption is not sufficient. According to the present invention, the encryption module is further provided with a unique identifier, referred to as a key identifier herein, identifying the encryption module. This key identifier is independent from the user or terminal identification approach used in the user terminal. The user or terminal identification may be fixedly stored in the user terminal or it may be provided on a separate subscriber identification module (SIM) or a smart card. However, it is essential to keep the terminal or user identification separate from the module. For example, if the end-to-end encryption were located on the same smart card with the normal subscriber identification and authentication data, it could not always be assured that the interface between the terminal and the module is secure enough to maintain the confidentiality level required by the end-to-end encryption users.

In accordance with the present invention, in response to turning on the user terminal and/or logging into the infrastructure of the mobile communication system, the encryption module causes the user terminal to send to an encryption key management system a notification message informing the unique key identifier of the encryption module and the user or terminal identifier of the user terminal which the encryption module is attached to. The user terminal employs the user or terminal identifier as a source address in the notification message sent. In response to receiving the notification message the encryption key management system creates or updates association data which associates the unique key identifier of the encryption module and any related encryption data with the user or terminal identifier of the user terminal which the encryption module is currently attached to. The key management system, such as the key management centre (KMC) needs to be able to link the address of the user terminal and the unique key identifier of the encryption module together. One of these identifies the end-to-end encryption user, depending on the policy employed in the key management system. The user or terminal identification of the user terminal is the address in the communication network to which the key management messages relating to the unique key identifier must be sent to. As the notification message is typically sent using a messaging system available in the specific communication system, the user or terminal identifier may be the sender or source address in the notification message. Therefore, the key management system can derive the user or user terminal identifier from the source address field of the notification message, and combine this information with the unique key identifier included in the notification message so as to logically link the encryption module and the address together.

The key management according to the present invention enhances the flexibility and the security of the encryption module approach. As the encryption module can be inserted to any user terminal regardless of the user or terminal identification scheme employed, no changes are required in the subscriber or terminal data in the communication system when the encryption module is inserted. This is an especially essential benefit in systems wherein the subscriber data is permanently programmed into the user terminal, such as the TETRA terminal. In the present invention, the encryption module itself initiates notification of its presence and current address to the key management system. The key management system is able to send proper key management messages to the correct address and encrypt the end-to-end encryption keys delivered by means of a correct key encryption key assigned to the specific key identifier. Thus, all the key management signalling is secure.

### BRIEF DESCRIPTION OF THE DRAWINGS

In the following, the invention will be described in more detail by means of embodiments of the invention with reference to the accompanying drawings, in which
Figure 1 is a block diagram illustrating a communication system wherein the present invention can be applied,
Figure 2 is a schematic functional block diagram illustrating user equipment provided with the encryption module,
Figure 3 is a flow diagram illustrating operation of the encryption module,
Figure 4 is a messaging diagram illustrating the messaging between the encryption module and the key management centre KMC via the user terminal,
Figure 5 is a flow diagram illustrating the operation of the key management centre KMC, and
Figure 6 is a table illustrating an example of the association data.

### DETAILED DESCRIPTION OF THE INVENTION

The present invention can be applied in any communications system requiring end-to-end encryption.

In the following, the invention will be described using examples wherein the invention is implemented in the TETRA system or in a similar mobile communications system but the present invention is not intended to be limited to this type of communications system.

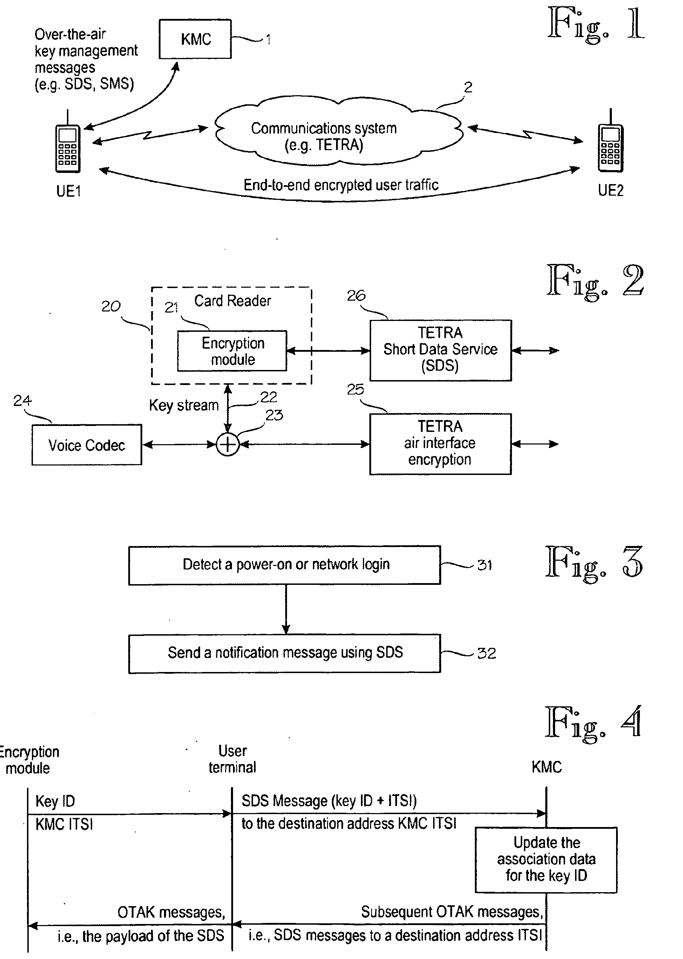

Figure 1 is a simplified illustration of the communications system wherein the present invention can be applied. It should be noted that the basic invention is preferably independent of the structure and operation of the communications system where it is employed. The end-to-end encryption and the related over-the-air key management (OTAK) are preferably provided on top of the communications system (on the user level) without affecting the normal operation of the system. In Figure 1, user terminals UE1 and UE2 communicate over the communications system 1 (e.g. TETRA) so that the user traffic is end-to-end encrypted. The end-to-end encrypted communication may also be carried out between a group of users, i.e. in a group call or group communication. Similarly, one of the parties of the end-to-end encrypted communication may be a fixed network terminal or a network element, such as the dispatch centre. However, the present invention relates to operation of one user terminal and, more specifically, to operation of one encryption module and the key management of such a module. It is not relevant to the present invention which kind of communication is carried out.

The centralized key management requires some kind of key management system, such as the key management centre 2 shown in Figure 1. As also the over-the-air key management (OTAK) is carried out on top of the communications system (e.g. by means of using the short data service SDS or the short message service SMS), the key management centre 2 can be located quite freely. It may be connected directly to the infrastructure of the communications system as shown in Figure 1 but it may be connected also by some other means, such as via a user terminal.

The end-to-end encryption solution according to the present invention is based on a modular approach. The end-to-end encryption module is separate from at least most of the basic TETRA terminal hardware and software. An example of separation between the encryption module and the basic TETRA terminal functionality is illustrated in Figure 2. The TETRA user terminal is provided with a card reader 20 or corresponding interface unit enabling a mechanical accommodation of the module and the communication between the module and the rest of the TETRA terminal. The encryption module 21 is installed or inserted into the card reader or the corresponding interface. In the end-to-end encryption the main purpose of the encryption module 21 is to provide a key stream 22 that is XORed 23 with the TETRA coded voice stream (from the voice codec 24) to encrypt or decrypt it, depending on the direction of the speech. Similarly, any data stream can be encrypted or decrypted. In addition, there is typically a synchronizing control in which a synchronization vector that is used together with the encrypting key in producing the random key stream is exchanged between the encryption module and the user terminal. In order to decrypt the encrypted speech the receiver must know the value of the synchronization vector, and therefore, the synchronization vector may be sent a couple of times in the beginning of the communication, and after that periodically to keep the receiver in phase with the transmitter. The end-to-end encryption is a service on top of a standard TETRA network. Therefore, a standard TETRA air interface encryption/decryption and channel coding/decoding 25 is carried out for the end-to-end encrypted user traffic stream. As noted above, the confidentiality of the air interface is ensured using the air interface encryption. End-to-end encryption differs from the air interface encryption in that sense that the communication is never decrypted in the network, so also fixed terminals, such as dispatching stations, need to support this functionality if they want to participate into the end-to-end encrypted communication. The encryption module 21 is also able to use the TETRA short data service (SDS) in the TETRA terminal. Short data messages are text (or other format, such as binary) messages that can be transmitted in TETRA network between terminal equipments and/or network elements, such as dispatcher stations or the key management centre KMC. The SDS is very similar to the short message service SMS employed, for example, in the GSM system. However, instead of SDS or SMS any other messaging service available in each specific communication system can be employed for the key management messaging.

The encryption module may be implemented using smart card technology. Smart cards are well tested, and used increasingly in applications requiring high security, such as payment transactions. The balance between processing power, memory and power consumption is targeted towards radio terminals with limited weight and battery size. For example, the SCP (Smart Card Platform) proposed for the 3G mobile phones would be suitable for the present invention. However, instead of the smart card, the encryption module 21 can be implemented by any kind of electronic module. The encryption module 21 naturally contains a data processor with a sufficient processing power for handling the encryption functions and the key management functions. Further, the encryption module 21 contains electronic memory for storing the encryption algorithms, encryption keys, possible other encryption data, and the application programs. The information contents stored in the encryption module 21 include at least the end-to-end encryption algorithm, end-to-end encryption individual key, end-to-end encryption traffic key(s), and the address of the key management centre, e.g. the ITSI of the key management centre KMC. The encryption module 21 may further include knowledge of which traffic encryption key to use, linkage between cryptogroups and traffic encryption keys, and/or linkage between talk groups and cryptogroups. The latter information is often provided in form of an association table. In theory some of the needed functionality could be stored somewhere else in the terminal in an encrypted format. This could be done, e.g. in case there was not enough memory on the encryption module to store all of the traffic encryption keys.

When the encryption module 21 is programmed, a module specific, unique key encryption key is programmed to the module together with its key identifier. Also the address (e.g. ITSI) of the key management centre is programmed into the module. There may be an option that the user can later change the address of the KMC. Further, also the encryption algorithm is programmed into the encryption module 12.

The modular approach with the replaceable encryption module according to the present invention provides an easily customisable and therefore reasonably priced solution for end-to-end encryption. An interoperable interface between the module and the rest of the system can bring down the price of the user terminal to a reasonable level close to the price of the standard TETRA terminals. It should be noted that presently the end-to-end encryption, as any extra functionality, will become with a price. Both the terminals and the key management system need to be evaluated, purchased, and installed before this solution can be taken into use. Especially, if the end-to-end encryption algorithm is proprietary, developed, for example, by countries' security agents, the price difference may be quite remarkable with the traditional solutions.

Further, in order to have a complete solution, the key management infrastructure needs to be taken into account as well. The main secret, the module specific key, needs to be programmed into the encryption module securely, so that the key information cannot leak to unwanted parties. For the traffic encryption keys a more scalable solution, such as over-the-air programming is desirable. The whole system is based on each end-to-end encryption module having its own individual cipher key. This key is used to seal other keys, which might again be used to seal other keys. After the individual key encryption key KEK has been programmed into the encryption module 21, all other keys can be delivered to the encryption module using the over-the-air-keying (OTAK). Also a physical delivery using a key loading device is an option.

The main purpose of the key management centre KMC is to provide new encryption keys to those end-to-end encryption modules 21 that are allowed to get them, both by sending the keys automatically and by replying to key requests sent by the encryption modules. The key management centre is also the source of the module-specific individual encryption key, KEK, at least it has to know the KEK in order to be able encrypt the new traffic encryption keys TEK in the OTAK messages. The key management centre KMC ensures that all end-to-end encryption keys have a unique key identifier KeylD. As noted above, the address of the key management centre KMC is programmed into every end-to-end encryption module. The encryption modules in one TETRA network may or may not have the same key management centre KMC. The same management centre is likely only in case where every end-to-end encryption user is using the same encryption algorithm which is provided by the same organization. Different key management centres KMC can be used to lower the strain on one centre or in cases when there are several end-to-end encryption systems used within one network.

An encryption module 21 that is attached to a user terminal is configured to send a specific key management message, referred to as a notification message herein, when the user terminal is connected to (logged in) the network or when the user equipment is turned on. The notification message informs the key management centre KMC about the modules presence and the current location, i.e. the ITSI of the user equipment. The notification message further includes the key identifier KeylD of the module's unique encryption key KEK. This operation of the encryption module 21 is illustrated by steps 31 and 32 in Figure 3. Regardless of the numbering system normally used in the communication system (e.g. MS, ISDN or FSN) the notification message is sent to the KMC ITSI address, as that is the one known to the terminal. The benefit of this approach is that when an SDS message is sent to the ITSI (ISSI) address, the senders address (the user equipment ITSI) is shown in a similar format, and therefore the KMC does not need to know about the other numbers or their format in the communication systems. Addressing schemes corresponding to ITSI in the TETRA is used in other communications systems and can be applied in the similar manner for the purposes of the present invention.

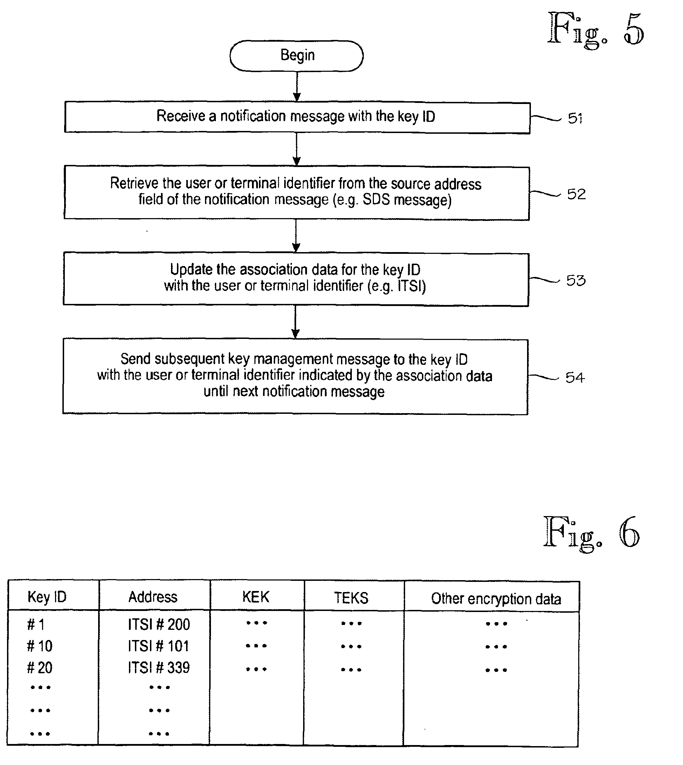

As illustrated in Figure 4, the encryption module 21 provides the user terminal with the key ID and the KMC ITSI and requests the terminal to send the notification message in form of a special type SDS message to the KMC.The SDS message will always automatically contain the sender address, i.e. the ITSI of the user terminal.

Referring now to Figure 5, the key management centre KMC receives the SDS notification message containing the key ID (step 51). As noted above, the SDS message includes a sender address or source address field containing the ITSI of the sending user terminal. Therefore, the KMC is readily able to retrieve the ITSI of the user equipment from this address field of the notification message (step 52). Combining this information with the unique key ID included in the same notification message the KMC can logically connect the encryption module and the ITSI together. The KMC then creates or updates stored association information linking the key ID and the current address of the encryption module together (step 53). In an embodiment of the invention, the old ITSI addresses of the key ID may not be removed for security reasons but the new ITSI address may be added as the newest address. After that the key management centre KMC uses the ITSI address of the key ID for any subsequent key management messages until next notification message is received from the specific encryption module 21 (step 54). In other words, the subsequent OTAK messages are SDS messages with the destination address (ITSI) indicated by the association data. The SDS message is routed through the communication network to the user terminal which then forwards the content of the OTAK messages, i.e. the payload of the SDS to the encryption module 21. At least part of the content of the OTAK message is preferably encrypted by the key encryption key KEK of the specific module. The subsequent key management messages may include key update (delivery) and deletion messages as well as key activation messages.

An example of a possible implementation of the association data is shown in Figure 6. In other words, there is some kind of data structure which links the key ID and the address together. In Figure 6, this structure is a table which contains at least the key ID and the address. For example, for the key ID#1 the address is ITSI#200. The same table may also include the key encryption keys KEK, the traffic encryption keys TEK, and other encryption data related to the specific encryption module. These other keys and data can also be located in one or more separate tables or data structures which are indexed by either the key ID or the ITSI. In other words, either the ITSI or the key ID can be used to identify the user depending on the system policy. In systems where the user is issued a personal end-to-end encryption module but not a personal terminal the identifier is likely to be the key ID, while in system with a small fraction of users using end-to-end encryption (the usual case) the identifier is likely to be the identification of the user terminal, i.e. the ITSI. However, in both cases, the key ID is always a unique key and thereby the encryption of the key management messages is always bound the key ID, i.e. a specific encryption module.

In an embodiment of the invention the human user is included into the process by having a PIN query on the encryption module 21 before the notification message is sent to the network. If this PIN is used for composing a user-specific payload into the notification message, this concept may be extended to also cover user authentication instead of only subscriber identification. The key management centre can authenticate the payload of the received message, for example by making an interrogation to a special purpose authentication server. Naturally, it is preferable to encrypt such a sensitive payload in order to avoid misuse and to ensure the confidentiality.

It should be appreciated that the specific end-to-end encryption algorithm, the encryption keys and the specific content of the key management messages is not relevant to the present invention which is directed to the modularity of the user equipment and the new key management concept.

It will be obvious to a person skilled in the art that, as the technology advances, the inventive concept can be implemented in various ways. The invention and its embodiments are not limited to the examples described above but may vary within the scope of the claims.

## Claims

1. An encryption key management method for a mobile communications system, **characterized by** comprising
attaching to a user terminal (UE1) of the mobile communication system a removable end-to-end encryption module (21) including at least one end-to-end encryption algorithm and at least one end-to-end encryption key and a unique key identifier of the encryption module (21),
in response to turning on the user terminal (UE1) and/or logging in to infrastructure of the mobile communications system, the encryption module (21) sends (32) a notification message containing the unique key identifier of the encryption module (21) to an encryption key management system (KMC) via the user terminal (UE1) which the encryption module (21) is attached to, the user terminal (UE1) providing the notification message with a user or terminal identifier thereof as a source address,
in response to receiving said notification message in the encryption key management system (KMC), creating or updating (53) association data which associates the unique key identifier of the encryption module (21) and possible related data with the user or terminal identifier of the user terminal (UE1) which the encryption module (21) is attached to, and
sending (54) any subsequent encryption key management message from the encryption key management system (KMC) to the encryption module (21) with the user or terminal identifier indicated by the association data as a destination address.

2. The method according to claim 1, **characterized in that** the notification message is a short data message or a short message.

3. The method according to claim 1 or 2, **characterized in that** the encryption key management system (KMC) derives (52) the user or terminal identifier of the user terminal (UE1) on the basis of the source address of the notification message.

4. The method according to claim 1, 2 or 3, **characterized in that** the encryption key management message is a short data message or a short message.

5. The method according to claim 4, **characterized in that** the encryption key management system (KMC) inserts the user or terminal identifier of the user terminal (UE1) in the destination address field of the encryption key management message while the actual key management data is carried in the payload of the encryption key management message.

6. The method according to any one of claims 1 to 5, **characterized by** encrypting the encryption key management message according to a key encryption key associated with the key identifier.

7. The method according to any one of claims 1 to 6, **characterized in that** at least one of the encryption key management messages carries at least one new end-to-end encryption key.

8. The method according to any one of claims 1 to 7, **characterized in that** the user or terminal identifier is fixedly associated with and stored in the user terminal (UE1).

9. The method according to any one of claims 1 to 8, **characterized in that** the encryption module (21) comprises a smart card insertable in the user terminal (UE1).

10. An encryption key management system (KMC) for a mobile communications system, **characterized by** comprising
means for receiving a notification message from a removable end-to-end encryption module (21) including at least one end-to-end encryption algorithm and at least one end-to-end encryption key and a unique key identifier identifying the encryption module (21), said notification message containing the unique key identifier of the encryption module (21) and a user or terminal identifier of a user terminal (UE1) which the encryption module (21) is currently attached to,
means responsive to receiving said notification message for creating or updating association data which associates the unique key identifier of the encryption module (21) and possible related data with the user or terminal identifier of the user terminal (UE1) which the encryption module (21) is currently attached to, and
means for sending any subsequent encryption key management message from the encryption key management system (KMC) to the encryption module (21) with the user or terminal identifier indicated by the association data as a destination address.

11. The system according to claim 10, **characterized in that** the notification message is a short data message or a short message, and that the encryption key management system (KMC) is adapted to derive the user or terminal identifier of the user terminal (UE1) on the basis of the source address of the notification message.

12. The system according to claim 10 or 11, **characterized in that** the encryption key management message is a short data message or a short message, and that the encryption key management system (KMC) is adapted to insert the user or terminal identifier of the user terminal (UE1) in the destination address field of the encryption key management message while the actual key management data is carried in the payload of the encryption key management message.

13. The system according to any one of claims 10, 11 or 12, **characterized in that** the encryption key management system (KMC) is adapted to encrypt the encryption key management message according to a key encryption key associated with the key identifier.

14. The system according to any one of claims 10 to 13, **characterized in that** at least one of the encryption key management messages carries at least one new end-to-end encryption key.

15. User equipment for a mobile communications system, **characterized by** comprising
a user terminal (UE1) with a user or terminal identifier fixedly associated with and stored in the user terminal (UE1),
a removable end-to-end encryption module (21) attached to the user terminal (UE1), the encryption module (21) including at least one end-to-end encryption algorithm and at least one end-to-end encryption key and a unique key identifier identifying the encryption module (21),
means in the removable encryption module (21) responsive to turning on the user terminal (UE1) and/or logging in to infrastructure of the mobile communications system, for causing the user terminal (UE1) to send to an encryption key management system (KMC) a notification message containing the unique key identifier of the encryption module (21) and a user or terminal identifier of the user terminal (UE1), thereby enabling the encryption key management system to create or update association data which associates the unique key identifier of the encryption module (21) and possible related data with the user or terminal identifier of the user terminal (UE1) which the encryption module (21) is currently attached to.

16. The equipment according to claim 15, **characterized in that** the notification message is a short data message or a short message.

17. The equipment according to claim 15 or 16, **characterized in that** the encryption module (21) comprises a smart card insertable in the user terminal (UE1).

## Patentansprüche

1. Verschlüsselungsschlüsselverwaltungsverfahren für ein mobiles Kommunikationssystem, **dadurch gekennzeichnet, dass** es umfasst
Hinzufügen zu einem Anwenderendgerät (UE1) des mobilen Kommunikationssystems ein entfernbares Ende-zu-Ende-Verschlüsselungsmodul (21) enthaltend wenigstens einen Ende-zu-Ende-Verschlüsselungsalgorithmus und wenigstens einen Ende-zu-Ende-Verschlüsselungsschlüssel und eine einzigartige Schlüsselkennung des Verschlüsselungsmoduls (21),
wobei als Antwort auf Einschalten des Anwenderendgeräts (UE1) und/oder Einbuchen in Infrastruktur des mobilen Kommunikationssystems, das Verschlüsselungsmodul (21) eine Benachrichtigungsnachricht sendet (32), die die einzigartige Schlüsselkennung des Verschlüsselungsmoduls (21) enthält, an ein Verschlüsselungsschlüsselverwaltungssystem (KMC) über das Anwenderendgerät (UE1), zu dem das Verschlüsselungsmodul (21) hinzugefügt ist, wobei das Anwenderendgerät (UE1) die Benachrichtigungsnachricht mit einer Anwender- oder Endgerätekennung davon als eine Quellenadresse bereitstellt,
als Antwort auf Empfangen der Benachrichtigungsnachricht in dem Verschlüsselungsschlüsselverwaltungssystem (KMC) Erzeugen oder Aktualisieren (53) von Zuordnungsdaten, die die einzigartige Schlüsselkennung des Verschlüsselungsmoduls (21) und mögliche damit in Beziehung stehende Daten der Anwender- oder Endgerätekennung des Anwenderendgeräts (UE1), zu dem das Verschlüsselungsmodul (21) hinzugefügt ist, zuordnen und
Versenden (54) jeder nachfolgenden Verschlüsselungsschlüsselverwaltungsnachricht von dem Verschlüsselungsschlüsselverwaltungssystem (KMC) an das Verschlüsselungsmodul (21) mit der Anwender- oder Endgerätekennung, die durch die Zuordnungsdaten angezeigt ist, als eine Zieladresse.

2. Verfahren gemäß Anspruch 1, **dadurch gekennzeichnet, dass** die Benachrichtigungsnachricht eine Kurzdatennachricht oder eine Kurznachricht ist.

3. Verfahren gemäß Anspruch 1 oder 2, **dadurch gekennzeichnet, dass** das Verschlüsselungsschlüsselverwaltungssystem (KMC) die Anwender- oder Endgerätekennung des Anwenderendgeräts (UE1) basierend auf der Quellenadresse der Benachrichtigungsnachricht ableitet (52).

4. Verfahren gemäß Anspruch 1, 2 oder 3, **dadurch gekennzeichnet, dass** die Verschlüsselungsschlüsselverwaltungsnachricht eine Kurzdatennachricht oder eine Kurznachricht ist.

5. Verfahren gemäß Anspruch 4, **dadurch gekennzeichnet, dass** das Verschlüsselungsschlüsselverwaltungssystem (KMC) die Anwender- oder Endgerätekennung des Anwenderendgeräts (UE1) in das Zieladressenfeld der Verschlüsselungsschlüsselverwaltungsnachricht einfügt, während die tatsächlichen Schlüsselverwaltungsdaten in der Nutzlast der Verschlüsselungsschlüsselverwaltungsnachricht transportiert werden.

6. Verfahren gemäß einem der Ansprüche 1 bis 5, **gekennzeichnet durch** Verschlüsseln der Verschlüsselungsschlüsselverwaltungsnachricht entsprechend einem Schlüsselverschlüsselungsschlüssel, der der Schlüsselkennung zugeordnet ist.

7. Verfahren gemäß einem der Ansprüche 1 bis 6, **dadurch gekennzeichnet, dass** wenigstens eine der Verschlüsselungsschlüsselverwaltungsnachrichten wenigstens einen neuen Ende-zu-Ende-Verschlüsselungsschlüssel transportiert.

8. Verfahren gemäß einem der Ansprüche 1 bis 7, **dadurch gekennzeichnet, dass** die Anwender- oder Endgerätekennung fest zugeordnet ist zu und abgespeichert ist in dem Anwenderendgerät (UE1).

9. Verfahren gemäß einem der Ansprüche 1 bis 8, **dadurch gekennzeichnet, dass** das Verschlüsselungsmodul (21) eine Smart Card umfasst, die in das Anwenderendgerät (UE1) einsetzbar ist.

10. Verschlüsselungsschlüsselverwaltungssystem (KMC) für ein mobiles Kommunikationssystem, **dadurch gekennzeichnet, dass** es umfasst
Mittel zum Empfangen einer Benachrichtigungsnachricht von einem entfernbaren Ende-zu-Ende-Verschlüsselungsmodul (21), das enthält wenigstens einen Ende-zu-Ende-Verschlüsselungsalgorithmus und wenigstens einen Ende-zu-Ende-Verschlüsselungsschlüssel und eine einzigartige Schlüsselkennung, die das Verschlüsselungsmodul (21) kennzeichnet, wobei die Benachrichtigungsnachricht enthält die einzigartige Schlüsselkennung des Verschlüsselungsmoduls (21) und eine Anwender- oder Endgerätekennung des Anwenderendgeräts (UE1), zu dem das Verschlüsselungsmodul (21) im Moment hinzugefügt ist,
Mittel antwortend auf Empfangen der Benachrichtigungsnachricht zum Erzeugen oder Aktualisieren von Zuordnungsdaten, die die einzigartige Schlüsselkennung des Verschlüsselungsmoduls (21) und mögliche damit in Beziehung stehende Daten der Anwender- oder Endgerätekennung des Anwenderendgeräts (UE1), zu dem das Verschlüsselungsmodul (21) im Moment zugefügt ist, zuordnet, und
Mittel zum Senden jeder nachfolgenden Verschlüsselungsschlüsselverwaltungsnachricht von dem Verschlüsselungsschlüsselverwaltungssystem (KMC) an das Verschlüsselungsmodul (21) mit der Anwender- oder Endgerätekennung, die durch die Zuordnungsdaten angezeigt sind, als eine Zieladresse.

11. System gemäß Anspruch 10, **dadurch gekennzeichnet, dass** die Benachrichtigungsnachricht eine Kurzdatennachricht oder eine Kurznachricht ist und dass das Verschlüsselungsschlüsselverwaltungssystem (KMC) angepasst ist, die Anwender- oder Endgerätekennung des Anwenderendgeräts (UE1) basierend auf der Absendeadresse der Benachrichtigungsnachricht abzuleiten.

12. System gemäß Anspruch 10 oder 11, **dadurch gekennzeichnet, dass** die Verschlüsselungsschlüsselverwaltungsnachricht eine Kurzdatennachricht oder eine Kurznachricht ist und dass das Verschlüsselungsschlüsselverwaltungssystem (KMC) angepasst ist, die Anwender- oder Endgerätekennung des Anwenderendgeräts (UE1) in das Zieladressfeld der Verschlüsselungsschlüsselverwaltungsnachricht einzufügen, während die tatsächlichen Schlüsselverwaltungsdaten in der Nutzlast der Verschlüsselungsschlüsselverwaltungsnachricht transportiert werden.

13. System gemäß einem der Ansprüche 10, 11 oder 12, **dadurch gekennzeichnet, dass** das Verschlüsselungsschlüsselverwaltungssystem (KMC) angepasst ist, die Verschlüsselungsschlüsselverwaltungsnachricht entsprechend einem Schlüsselverschlüsselungsschlüssel, der der Schlüsselkennung zugeordnet ist, zu verschlüsseln.

14. System gemäß einem der Ansprüche 10 bis 13, **dadurch gekennzeichnet, dass** wenigstens eine der Verschlüsselungsschlüsselverwaltungsnachrichten wenigstens einen neuen Ende-zu-Ende-Verschlüsselungsschlüssel transportiert.

15. Anwenderausstattung für ein mobiles Kommunikationssystem, **dadurch gekennzeichnet, dass** es umfasst
ein Anwenderendgerät (UE1) mit einer Anwender- oder Endgerätekennung, die fest zugeordnet zu und gespeichert ist in dem Anwenderendgerät (UE1),
ein entfernbares Ende-zu-Ende-Verschlüsselungsmodul (21), das zu dem Anwenderendgerät (UE1) hinzugefügt ist, wobei das Verschlüsselungsmodul (21) enthält wenigstens einen Ende-zu-Ende-Verschlüsselungsalgorithmus und wenigstens einen Ende-zu-Ende-Verschlüsselungsschlüssel und eine einzigartige Schlüsselkennung, die das Verschlüsselungsmodul (21) kennzeichnet,
Mittel in dem entfernbaren Verschlüsselungsmodul (21), die auf ein Einschalten des Anwenderendgeräts (UE1) und/oder Einbuchen in eine infrastruktur des mobilen Kommunikationssystems antworten, zum Veranlassen, dass das Anwenderendgerät (UE1) zu einem Verschlüsselungsschlüsselverwaltungssystem (KMC) eine Benachrichtigungsnachricht sendet, die die einzigartige Schlüsselkennung des Verschlüsselungsmoduls (21) und eine Anwender- oder Endgerätekennung des Anwenderendgeräts (UE1) enthält, wodurch dem Verschlüsselungsschlüsselverwaltungssystem ermöglicht wird, Zuordnungsdaten zu erzeugen oder zu aktualisieren, die die einzigartige Schlüsselkennung des Verschlüsselungsmoduls (21) und mögliche damit in Beziehung stehende Daten der Anwender- oder Endgerätekennung des Anwenderendgeräts (UE1), zu dem das Verschlüsselungsmodul (21) im Moment hinzugefügt ist, zuzuordnen.

16. Anwenderausstattung gemäß Anspruch 15, **dadurch gekennzeichnet, dass** die Benachrichtigungsnachricht eine Kurzdatennachricht oder eine Kurznachricht ist.

17. Ausstattung gemäß Anspruch 15 oder 16, **dadurch gekennzeichnet, dass** das Verschlüsselungsmodul (21) eine Smart Card umfasst, die in das Anwenderendgerät (UE1) einsetzbar ist.

## Revendications

1. Procédé de gestion de clé de cryptage destiné à un système de communication mobile, **caractérisé en ce qu'**il comprend
le raccordement à un terminal utilisateur (UE1) du système de communication mobile d'un module de cryptage de bout en bout amovible (21) comprenant au moins un algorithme de cryptage de bout en bout et au moins une clé de cryptage de bout en bout et un identifiant de clé unique du module de cryptage (21),
en réponse à l'activation du terminal utilisateur (UE1) et/ou à une connexion à l'infrastructure du système de communication mobile, le module de cryptage (21) envoie (32) un message de notification contenant l'identifiant de clé unique du module de cryptage (21) à un système de gestion de clé de cryptage (KMC) via le terminal utilisateur (UE1) auquel le module de cryptage (21) est raccordé, le terminal utilisateur (UE1) fournissant le message de notification avec un identifiant d'utilisateur ou de terminal de celui-ci en tant qu'adresse de source,
en réponse à la réception dudit message de notification dans le système de gestion de clé de cryptage (KMC), la création ou la mise à jour (53) de données d'association qui associent l'identifiant de clé unique du module de cryptage (21) et des données connexes relatives à l'identifiant d'utilisateur ou de terminal du terminal utilisateur (UE1) auquel le module de cryptage (21) est raccordé, et
l'envoi (54) de tout message de gestion de clé de cryptage ultérieur par le système de gestion de clé de cryptage (KMC) au module de cryptage (21) avec l'identifiant d'utilisateur ou de terminal indiqué par les données d'association en tant qu'adresse de destination.

2. Procédé selon la revendication 1, **caractérisé en ce que** le message de notification est un message de données court ou un message court.

3. Procédé selon la revendication 1 ou 2, **caractérisé en ce que** le système de gestion de clé de cryptage (KMC) dérive (52) l'identifiant d'utilisateur ou de terminal du terminal utilisateur (UE1) sur la base de l'adresse de source du message de notification.

4. Procédé selon la revendication 1, 2 ou 3, **caractérisé en ce que** le message de gestion de clé de cryptage est un message de données court ou un message court.

5. Procédé selon,la revendication 4, **caractérisé en ce que** le système de gestion de clé de cryptage (KMC) insère l'identifiant d'utilisateur ou de terminal du terminal utilisateur (UE1) dans le champ d'adresse de destination du message de gestion de clé de cryptage tandis que les données de gestion de clé réelles sont acheminées dans la charge utile du message de gestion de clé de cryptage.

6. Procédé selon l'une quelconque des revendications 1 à 5, **caractérisé par** le cryptage du message de gestion de clé de cryptage selon une clé de cryptage associée à l'identifiant de clé.

7. Procédé selon l'une quelconque des revendications 1 à 6, **caractérisé en ce qu'**au moins l'un des messages de gestion de clé de cryptage achemine au moins une nouvelle clé de cryptage de bout en bout.

8. Procédé selon l'une quelconque des revendications 1 à 7, **caractérisé en ce que** l'identifiant d'utilisateur ou de terminal est associé de manière fixe à et stocké dans le terminal utilisateur (UE1).

9. Procédé selon l'une quelconque des revendications 1 à 8, **caractérisé en ce que** le module de cryptage (21) comprend une carte intelligente pouvant être insérée dans le terminal utilisateur (UE1).

10. Système de gestion de clé de cryptage (KMC) destiné à un système de communication mobile, **caractérisé en ce qu'**il comprend
un moyen de réception d'un message de notification de la part d'un module de cryptage de bout en bout (21) comprenant au moins un algorithme de cryptage de bout en bout et au moins une clé de cryptage de bout en bout et un identifiant de clé unique identifiant le module de cryptage (21), ledit message de notification contenant l'identifiant de clé unique du module de cryptage (21) et un identifiant d'utilisateur ou de terminal d'un terminal utilisateur (UE1) auquel le module de cryptage (21) est actuellement raccordé,
un moyen réagissant à la réception dudit message de notification afin de créer ou de mettre à jour des données d'association qui associent l'identifiant de clé unique du module de cryptage (21) et des données connexes possibles à l'identifiant d'utilisateur ou de terminal du terminal utilisateur (UE1) auquel le module de cryptage (21) est actuellement raccordé, et
un moyen d'envoi de tout message de gestion de clé de cryptage ultérieur par le système de gestion de clé de cryptage (KMC) au module de cryptage (21) avec l'identifiant d'utilisateur ou de terminal indiqué par les données d'association en tant qu'adresse de destination.

11. Système selon la revendication 10, **caractérisé en ce que** le message de notification est un message de données court ou un message court, et **en ce que** le système de gestion de clé de cryptage (KMC) est adapté afin de dériver l'identifiant d'utilisateur ou de terminal du terminal utilisateur (UE1) sur la base de l'adresse de source du message de notification.

12. Système selon la revendication 10 ou 11, **caractérisé en ce que** le message de gestion de clé de cryptage est un message de données court ou un message court, et **en ce que** le système de gestion de clé de cryptage (KMC) est adapté afin d'insérer l'identifiant d'utilisateur ou de terminal du terminal utilisateur (UE1) dans le champ d'adresse de destination du message de gestion de clé de cryptage tandis que les données de gestion de clé réelles sont acheminées dans la charge utile du message de gestion de clé de cryptage.

13. Système selon l'une quelconque des revendications 10, 11 ou 12, **caractérisé en ce que** le système de gestion de clé de cryptage (KMC) est adapté afin de crypter le message de gestion de clé de cryptage selon une clé de cryptage associée à l'identifiant de clé.

14. Système selon l'une quelconque des revendications 10 à 13, **caractérisé en ce qu'**au moins l'un des messages de gestion de clé de cryptage achemine au moins une nouvelle clé de cryptage de bout en bout.

15. Equipement utilisateur destiné à un système de communication mobile, **caractérisé en ce qu'**il comprend
un terminal utilisateur (UE1) ayant un identifiant d'utilisateur ou de terminal associé de manière fixe à et stocké dans le terminal utilisateur (UE1),
un module de cryptage de bout en bout amovible (21) raccordé au terminal utilisateur (UE1), le module de cryptage (21) comprenant au moins un algorithme de cryptage de bout en bout et au moins une clé de cryptage de bout en bout et un identifiant de clé unique identifiant le module de cryptage (21),
un moyen dans le module de cryptage amovible (21) réagissant à l'activation du terminal utilisateur (UE1) et/ou à une connexion à l'infrastructure du système de communication mobile, afin que le terminal utilisateur (UE1) envoie à un système de gestion de clé de cryptage (KMC) un message de notification contenant l'identifiant de clé unique du module de cryptage (21) et un identifiant d'utilisateur ou de terminal du terminal utilisateur (UE1), permettant ainsi au système de gestion de clé de cryptage de créer ou de mettre à jour des données d'association qui associent l'identifiant de clé unique du module de cryptage (21) et des données connexes possibles à l'identifiant d'utilisateur ou de terminal du terminal utilisateur (UE1) auquel le module de cryptage (21) est actuellement raccordé.

16. Equipement selon la revendication 15, **caractérisé en ce que** le message de notification est un message de données court ou un message court.

17. Equipement selon la revendication 15 ou 16, **caractérisé en ce que** le module de cryptage (21) comprend une carte intelligente pouvant être insérée dans le terminal utilisateur (UE1).
